# EUROPEAN PATENT SPECIFICATION

(11) **EP 2 343 330 B1**
(45) Date of publication and mention of the grant of the patent: **21.12.2011**
(21) Application number: 10150497.5
(22) Date of filing: 12.01.2010
(51) Int. Cl.: C08J 3/22

(54) **High-concentrate masterbatches comprised of multifunctional compounds for polyester expanding process**
Multifunktionelle Verbindungen enthaltende hochkonzentrierte Masterbatche zum Verschäumen von Polyestern
Mélanges maîtres fortement concentrés comprenant des composés multifonctions pour le processus d'expansion de polyester

(43) Date of publication of application: 13.07.2011
(73) Proprietor: Armacell Enterprise GmbH, 48153 Münster (DE)
(72) Inventor: Li, Jie, 4800, Zofingen (CH)
(74) Representative: von Füner, Nicolai

(56) References cited:
- EP-A1- 2 009 043
- EP-A1- 2 163 577
- US-A- 4 999 388
- US-A1- 2007 100 056

## Description

Foaming of polyesters is rather a new technology, which is nowadays more and more practiced by using a reactive extrusion comprising upgrading or increase of molecular weight and extensional viscosity of aromatic polyester resins during the extrusion process. Thus, only a limited number of prior art can be found. The limited prior art up today disclosed the application of chain-extenders such as multifunctional tetracarboxylic dianhydrides for upgrading of polyester resins.

The invention [1] for instance disclosed chain-extenders like tetracarboxylic dianhydride in combination with an antioxidant comprising sterically hindered phenolic end groups, addition of an oxazoline into said mixture and application of such compositions.

To reduce or eliminate the instability problems of said reactive foam extrusion, use of a concentrate (masterbatch) recommended for example by [1-5], obtained by melt blending the multifunctional chain-extending/branching compound containing tetracarboxylic dianhydride and a carrier polymer, is mostly preferred. The concentrate is then mixed at given levels with the polyester in an extruder (preferably a twin-screw extruder) to have aromatic polyester resin foamed in a stable process.

The melting point of some applied chain-extending ingredients is, however, lower than the carrier materials or below/within the temperature range of the preparation process. A list of such ingredients used in examples of [1-5], is indicated in Tab. 1.

**Tab. 1: Melting point of ingredients**

| **Ingredient** | **Melting point (°C)** |
|---|---|
| PMDA | 286.0 - 287.5 |
| Irganox 1330/Ethanox 330 | 240.0 - 245.0 |
| Irganox 1010 | 110.0 - 125.0 |
| 1,3-PBO | 145.0 - 147.0 |

Due to the fact that ingredients might be already, at least partially, molten in the preparation process of concentrates, the production of such masterbatches is difficult, if not impossible. The efficiency of obtained concentrates may be impaired because of the unwished chemical reaction during production of said concentrates. On the other hand, choice of inappropriate carrier materials may lead to problems at or even interruption of a reactive foam extrusion production.

[2] disclosed a concentrate comprising PET as carrier material and pyromellitic dianhydride as the multifunctional compound, which is used in the reactive extrusion process of PET foaming. The concentrate is obtained by mixing PMDA in molten PET at temperatures as high as 280-300°C, whereas PET molecular branching and gel formation take place during this melt blending process. The high processing temperature necessary for compounding of the ingredient can result in sublimation of PMDA at the extruder head. Such problems cause an instable foaming process and inconsistent foam quality.

Application of PC as carrier material as described in [4] leads similarly to above problems: A molecular branching of polycarbonate and gel formation occur. A sublimation of PMDA caused by high processing temperature and additionally by sticking problems of PC is inevitable at the extruder head. It has been found that a concentrate containing PC as carrier material is not able to provide a continuously stable foaming process. In addition, the cell structure of produced foam products is mostly not uniform.

Another type of masterbatch is obtained according to [3] by melt blending 1 to about 50 wt% of multifunctional carboxylic anhydrides in 50 to 99wt% of molten polyolefin. The concentrate is subsequently applied in the polyester foaming process at a high temperature (280-300°C), at which polyolefin tends to degradation. In worst case, the degradation of polyolefin causes a dramatic melt strength and/or pressure decrease in extruder and die, so that the blowing agent can not remain in the polyester melt and no foaming is possible. The relatively low softening and melting point of polyolefin (LDPE used in examples of [3] has for instance a melting point around 110°C) and the relatively high drying temperature of PET (normally at a temperature of 110-165°C) can not guarantee a stable and continuous foaming process: 1) Drying of this masterbatch containing high-percentage of polyolefin is not easy due to stickiness and bridging problems caused by the low softening point of polyolefin and 2) A direct contact of the dried PET with said concentrate before the melting zone softens and even melts the concentrate, resulting in blocking of the feeder, hopper or even the feeding zone of the extruder, followed by an instable process or even an interruption of the extrusion production. Furthermore, due to a poor compatibility between polyolefin and polyester, an instable foaming process and inhomogeneous cell structure result from a poor dispersion of the ingredient and possible active nucleation sites within the polyester melt.

As described by the invention [5], polyethylene and PET are employed as carrier materials which in form of powders are mixed with chain-extenders such as PMDA, Irganox 1010 and Polymist F5A and extrusion-granulated at a setting temperature of 180°C. The melt strands are water-cooled before granulating. In case of an under-water granulating, the temperature setting of a strand die must be much higher than 180°C to prevent a die freezing. Beside degradation tendency of polyethylene in the polyester foaming process at a high temperature (280-300°C), granulates of the masterbatch prepared according to [5] have contact with water during the cooling process, whereas the highly hygroscopic PMDA might absorb and react with water. This is a common disadvantage of [1-5] and reduces the efficiency of said masterbatch in later applications. In addition, it is not of advantage to apply the preparation process disclosed in [5] for chain-extending concentrates containing a process stabilizer Irganox 1010 at 180°C, because at this temperature, Irganox 1010 might have been already consumed in the preparation process, possibly resulting in an insufficient thermal stabilization of polyethylene or polyester during the final foaming process.

In case of post-consumer polyesters, which require addition of a chain-extending concentrate at a much higher amount, the increased amount of polyethylene in the formulation tends to a higher potential of degradation, pressure decrease and thus process instability during the foam process.

Local overheating of mixtures, consumption of multifunctional ingredients, absorption of water or even reaction of hygroscopic additives with water, chain-extension reaction in preparation process, and a potential degradation of carrier materials in final expanding process are considered problems and disadvantages of the above inventions.

The objective of the current invention is to solve/eliminate such problems by developing a new type of masterbatch at a very high concentration of multifunctional compound acting as chain-extenders/branchers, while a preparation process at temperatures set lower than 100°C needs to be implemented in combination with a water-free cooling. The new concentrate should be able to perform a stable expanding process consisting of a process chain from drying to extrusion and to allow a mass production of expanded materials of polyesters with uniform and consistent properties.

### 1. Description of Invention

In the current invention, it has been found that it is possible to obtain a masterbatch at a very high concentration (up to 97 wt%) of ingredients, which, however, surprisingly enables a stable foaming process without the problems mentioned before and can be used to produce expanded materials of aromatic polyesters and polyester blends with fine, homogeneous, consistent and close cells. The high-concentrate masterbatch is prepared in a process comprising mixing a multifunctional chain-extending compound and a thermoplastic wax, compacting and granulating the mixture in the softening range of the wax and cooling the granulates of the high-concentrate through a vibrating cooling line without any direct contact with water.

The high-concentrate is comprised of 1) 2-20wt%, preferably 3-10wt% of a thermoplastic wax having a vicat softening temperature not higher than 100°C (A50 (50°C/h 10N)) according to ISO 306 and selected from one or a mixture of polar ethylene-acrylate copolymers, ethylene vinyl acetate copolymers or polyolefins and 2) up to 97 wt-% of a multifunctional compound comprising one of chain-extending ingredients or a mixture thereof and 3) thermal/antioxidative stabilizer, wherein the wax and the additives all in form of a powder with a particle size less than 500µm in average (according to DIN EN ISO 4610), preferably below 200µm are compacted to the masterbatch.

The preparation process of the concentrate consists basically of three steps: 1) mixing the additives and the wax at a rotation speed higher than 200 rpm and for at least 5 minutes by means of a high-speed mixer provided with static mixing elements, 2) compacting the mixture at a mixture temperature lower than 100°C by pressing powders through a multihole die by means of a pan grinding press like the one of [6] to form the powders into endless strands, which are then cut to the desired particle length by using rotating knives and 3) cooling the pellets with help of a vibrating cooling line equipped with multiple chambers, which are tempered by cooling water, whereas the pellets are conveyed from one chamber to another through the vibration motion. During the whole compacting and cooling process, the granules of the high-concentrate masterbatch have no direct contact with water.

A pan grinding press for pressing powdered and bulk materials to form pellets like that disclosed in [6] was applied in this invention, this kind of press is widely used in chemistry and pharmaceutical industry. Such a pan grinding press has a perforated die on which the powders to be pressed can be mounted. A press with a large pelleting chamber avoids blocking and bridging of powders. There is furthermore provided a pan grinder head with normally 2 pan grinder rollers which can be driven to rotate with respect to the die by means of a motor. The pan grinder rollers roll on the multihole die, but the precise speed of rotation being set by means of motors in such a way that there is no sliding movement between the pan grinder rollers and the die, but a desired advancing or retarding sliding movement is achieved. The pan grinding press is not heated, the mixture temperature measured normally at the multihole die is generated by compression and friction between the mixture, rollers and multiholes.

The homogeneity of the ingredients inside the concentrate granules is determined by the very crucial mixing process, whereas the rotating speed and mixing time are one of the important influence factors. A rotor speed over 200rpm, preferably over 500rpm in average is needed for an at least 5 minutes mixing duration.

After the mixing, the powder mixture is fed into the pan grinding press by gravity. The adhesion of ingredients in the compacted concentrate is provided by selection and amount of the thermoplastic wax, roller speed, gap between rollers and multihole die and the hole configuration (diameter and height). The process conditions influence the adhesion in form of temperature of compacted product during the compact-pelleting process: A higher temperature of the compacted masterbatch indicates a better adhesion. It has been found that a concentrate which is provided with 2-20wt%, preferably 3-10wt% of the wax and compact-pelleted at a measured product temperature of 60-80°C enables a stable reactive extrusion to produce a foamed polyester material with uniform and fine cell structure. It has been turned out that, depending on the size of a pan grinding press, application of a multihole die having hole configuration provided with diameter of around 3mm and length of 10-20mm, a roller gap of 0.5-1.5mm and a slow roller speed of 0.5-0.8m/s for a roller diameter of 130mm can reach an appropriate ingredients' adhesion.

A stable, satisfactory foam extrusion can be achieved if the high-concentrate masterbatch is fed into the extruder and conveyed in the feeding zone in form of granules. An effective dispersive distribution and a following distributive mixing of the concentrate in the resin, contributing to a stable extrusion process, is implemented by crunching the concentrate granules to powder already in the compression zone of an extruder and distributing the powder through the screw rotating, A loose adhesion of ingredients in the concentrate leads to a too early crunching of pellets during packing, transport or drying process. A too strong adhesion tends towards the potential that the concentrate still exists in form of granules in the compression zone of extruder, resulting in an insufficient homogeneity of chain-extending ingredients and thus an unstable expanding process.

It has also been found that the particle size affects the process stability as well: A big particle size is disadvantageous due to a poor dispersive mixing effect in a forming extruder. The particle size of the concentrate preferably ranges below 3mm, particularly preferably from 1 to 3mm.

Due to the high-concentration of ingredients in the masterbatch, a precise feeder is required to dose the small amount of said masterbatch into the extruder.

Another embodiment of the masterbatch composition is to add 10 to 85 weight percent, preferably 30 to 60 weight percent of a high-temperature (HT) thermoplastic resin in form of powder into the formulation for an improved dispersive mixing of the additives in the expanding process. The high-temperature (HT) thermoplastic is selected from one of thermoplastic resins or mixtures thereof having 1) a melting point not lower than 200°C for crystalline polymer or 2) a glass transition temperature not lower than 140°C for amorphous polymers. In addition, the HT thermoplastics which are preferably polyester or compatible to polyester need to be completely molten up to 300°C. The preferred high-temperature thermoplastics are aromatic polyesters, particularly preferably PET, PBT or PEN having an intrinsic viscosity of 0.4 to 1.4 dl/g. The addition of a HT thermoplastic resin doesn't impair the drying, feeding or expanding process, but is advantageous for the distribution of additives into the polyester melt in the final expanding process, since a bigger amount of the masterbatch needs to be fed into the processing equipment.

Moreover, the content of the thermoplastic wax can be increased up to 60wt% or even more for the purpose of an improved dispersive mixing of the additives in the expanding process. In this case, a wax having a higher softening temperature (70-110°C) is preferred for a still feasible drying at a temperature above 65°C for instance. The choice of the multihole die, setting of roller gap and roller speed need to be adjusted due to higher content of the wax. The adhesion of the ingredients in the masterbatch is much higher than in a high-concentrate having a much lower content of the wax. The higher adhesion doesn't worsen the distribution of the additives in polyester resin during the final expansion process, because the concentration of the ingredients is no more as high as the masterbatch with less wax content.

The very obvious benefit of using the above procedure for preparing the high-concentrate masterbatch is connected with the fact that the concentrate is produced at very low temperatures, at which no single ingredient is molten or consumed. Most additives even with a very low melting point can be prepared to a masterbatch without suffering from effectiveness lost. Another advantage of this procedure is based on the cooling process in which hygroscopic ingredients like PMDA have no contact with water. This benefit further improves the effectiveness of the chain-extending ingredients and the drying of said concentrate is also easier: No further drying after the cooling is needed anymore.

The torque of a mixture containing polyester and a certain amount of the masterbatch formulation was measured for 20min. by means of a Haake kneader at a blade rotating speed of 50 rpm and a setting temperature of 280°C. The comparison of the torque measurement to the same mixture composition before and after the compact-granulating process confirmed that there was almost no change in effectiveness of the multifunctional compound after the preparation process.

Because of the small amount of the thermoplastic polymer acting as wax, the overall melting point or softening temperature of said high-concentrate masterbatch is high enough, so that its pre-drying can take place at 80°C and no softening or bridging is expected either in a feeding station or inside a foaming extruder. A possible degradation of the thermoplastic wax, that might occur in the polyester foaming process at high temperatures (280-300°C), would neither lead to worsening of melt strength and a dramatic pressure decrease in an extrusion line, nor impair the foaming, since the tiny amount of the wax is almost negligible in the final foaming composition. This is particularly beneficial in case of reprocessing post-consumer polyester which requires application of chain-extending ingredients in a much more amount than processing a virgin resin.

In addition, the high-concentrate masterbatch, particularly used in a mass expanding production, provides commercial benefits of cost-saving in logistics, preparation process, transport, stocking and drying procedure. for the reason that it is applied for an expanding process in a very small amount.

The multifunctional compound used in the current invention is comprised of one or more chain-extending/branching ingredients preferably selected from a group consisting of tetracarboxylic dianhydride, polyepoxides, oxazolines, oxazines, acyllactams and antioxidant comprising sterically hindered phenolic end groups or mixtures thereof.

The most important multifunctional chain-extending compound used in this invention consists of tetra or polycarboxylic dianhydride selected from a group containing at least two anhydride per molecule such as pyromellitic dianhydride, benzophenone dianhydride, 2,2-bis (3,4-dicarboxyphenyl) propane dianhydride, 3,3', 4,4'-biphenyltetracarboxylic acid dianhydride, bis (3,4-dicarboxyphenyl) ether dianhydride, bis (3,4-dicarboxyphenyl) thioether dianhydride, bisphenol A bisether dianhydride, 2,2-bis (3,4-dicarboxylphenyl) hexafluoropropane dianhydride, 2,3,6,7-naphthalene-tetracarboxylic acid dianhydride, bis (3,4-dicarboxyphenyl) sulfone dianhydride, 1,2,5,6-naphthalene-tetracarboxylic acid dianhydride, 2,2',3,3'-biphenyltetracarboxylic acid dianhydride, hydroquinone bisether dianhydride, bis (3,4-dicarboxyphenyl) sulfoxide dianhydride, 3,4,9,10-perylene tetracarboxylic acid dianhydride and blends thereof.

Preferred tetracarboxylic dianhydrides are those containing aromatic rings.

Particularly preferred tetracarboxylic dianhydrides are pyromellitic dianhydride, 3,3', 4,4'benzophenonetetracarboxylic acid dianhydride and mixtures thereof.

The most preferred tetracarboxylic dianhydride is pyromellitic dianhydride (PMDA).

Another important multifunctional compound is polyepoxides having at least two epoxy groups per molecule. Typical polyepoxides are diepoxy compounds, ethylene glycol diglycidyl ether, polyethylene glycol diglycidyl ether, propylene glycol diglycidyl ether, polypropylene glycol diglycidyl ether, polytetramethylene glycol diglycidyl ether, glycerol diglycidyl ether, diglycidyl phthalate, diglycidyl terephthalate, dicyclopentadiene diepoxide, 3,4-epoxy-6-methylcyclohexyl-3,4-epoxy-6-methylcyclohexanecarboxylate, 3,4-epoxycyclohexyl-3,4-epoxycyclohexanecarboxylate and vinylcyclohexane diepoxide.

In invention [1], it has been found that the antioxidant comprising sterically hindered phenolic end groups in combination with a tetracarboxylic dianhydride leads to a significant increase of molecular weight of polyester during the heating and mixing process, since such a mixture also enhanced the extensional viscosity of polyester remarkably. Therefore, a primary antioxidant such as sterically hindered phenolic antioxidant: 4-((3,5-bis((4-hydroxy-3,5-ditert-butylphenyl)methyl)-2,4,6-trimethyl-phenyl)methyl)-2,6-ditert-butyl-phenol, sterically hindered hydroxyphenylalkylphosphonic acid ester or half ester is also applied in combination with tetracarboxylicdianhydrides in the current invention.

Beside above mentioned antioxidants, particularly suitable sterically hindered phenolic antioxidants selected from the group of so-called primary antioxidants include for instance: Pentaerythritol tetrakis(3-(3,5-di-tert-butyl-4-hydroxyphenyl)propionate), thiodiethylene bis[3-(3,5-di-tert-butyl-4-hydroxyphenyl)propionate], octadecyl-3-(3,5-di-tert.butyl-4-hydroxyphenyl)-propionate, N,N'-hexane-1,6-diylbis(3-(3,5-di-tert-butyl-4-hydroxyphenylpropionamide)), 1,3,5-tris(3,5-di-tert-butyl-4-hydroxybenzyl)-1,3,5-triazine-2,4,6(1H,3H,5H)-trione.

Particularly preferred sterically hindered phenolic antioxidant is selected from hydroxyphenyle propionate and hydrobenzyl groups such as: 4-((3,5-bis((4-hydroxy-3,5-ditert-butylphenyl)methyl)-2,4,6-trimethyl-phenyl)methyl)-2,6-ditert-butyl-phenol or calcium bis(monoethyl(3,5-di-tert-butyl-4-hydroxylbenzyl)phosphonate).

Furthermore, an oxazoline for further improvement of foamability of the polyesters can also be composed in the recipe of the multifunctional compound comprising mixture of sterically hindered phenolic antioxidant and tetracarboxylic dianhydride. Mixtures of different oxazoline can be applied in the concentrate recipes. Preferred oxazoline is the monooxazoline for instance 2-, 3- or 4-oxazoline as well as bisoxazoline. Particularly preferred bisoxazoline is 1,3-phenyl bisoxazoline and 1,4-phenyl bisoxazoline. Trioxazoline can be alternatively integrated into the recipe of said concentrates.

The thermoplastic wax used in the high-concentrate masterbatch consists of 2-20wt%, preferably 3-10wt% of a thermoplastic polymer in form of powder selected from polar ethylene-acrylate copolymers, ethylene vinyl acetate copolymers or polyolefins.

Preferred ethylene-acrylate copolymers are selected from ethylene butyl acrylate (EBA), ethylene ethyl acrylate (EEA), ethylene methyl acrylate (EMA), ethylene/acrylic ester/maleic anhydride terpolymer (EEAMA) or a mixture thereof. An ethylene-acrylate copolymer comprising acrylate content from 3 to 50% by weight and having a melt flow index from 0.1 to 200g/10min. at 190°C/2.16kg (according to ISO 1133) is claimed as a wax in the current invention.

An ethylene vinyl acetate copolymer is preferably selected from acetate copolymer comprising vinyl acetate content from 3 to 50% by weight and having a melt flow index from 0.1 to 200g/10min. at 190°C/2.16kg (according to ISO 1133).

Preferred polyolefins are a polyethylene preferably selected from Low Density Polyethylene (LDPE) having a melt flow index ranging from 0.1 to 200g/10min. at 190°C/2.16kg (according to ISO 1133).

In an expanding process such as the reactive extrusion processes to produce low density cellular foams, an amount of concentrate containing no HT thermoplastics resin from 0.1 to 3%, preferably between 0.2 and 1 % by weight of the mixture comprising concentrate and the polyester resin is applied, wherein an extrusion line is preferred, consisting basically of an extruder, die, dosing equipment, gas injector, heat exchanger, static mixer and die. The extrusion line is followed by downstream equipment such as puller, conveying rolls with air cooling, sawing unit, further cooling and grinding and packaging. All types of foaming extruders can be used for the reactive foam extrusion in the current invention: single-screw or co-/counterrotating twin-screw extruder, tandem extrusion line consisting of a primary extruder (twin- or single-screw extruder) and a secondary/cooling single-screw extruder.

In case of the formulation containing a HT thermoplastic polymer, the masterbatch in an amount of 0.2 to 10wt%, preferably from 0.4 to 5wt% is added into the mixture of polyester resin in the final process.

The blowing agents required for expansion are generally selected from carbon dioxide, nitrogen, alcohols, ketons, hydrocarbons, fluorohydrocarbons or mixture thereof.

The concentrate can contain additionally further additives such as process/thermal stabilizers, fluor-polymers, nucleating agents, UV stabilizers and flame retardants. in the recipes. Representative flame retardants are for example halogenated, charforming (like phosphorus-containing) or water-releasing compounds, charforming and water-releasing (like zinc borate) compounds. Commonly used nucleate types are talc, TiO₂, MgO, BaSO₄, SiO₂, Al₂O₃, CdO, ZnO, mica filler's earth, diatomaceous earth.

The application of said high-concentrate masterbatchs can be seen in all expanding processes of thermoplastic polymers (e.g. blow molding, batch process, injection molding or sheet extrusion for thermoforming), but focuses mainly on reactive foam extrusion to process a wide range of aromatic polyesters. The process for foaming aromatic polyesters is generally foam extrusion, wherein profile, annular, multihole and flat die can be applied to form an extrudate into a required final shape.

Preferred aromatic polyesters for production of final cellular foamed products include those derived from terephthalic acid, isophthalic acid, naphthalenedicarboxylic acid, cyclohexanedicarboxylic acid or the alkyl esters. Particularly preferred is DMT- or PTA-based PET with I.V.=about 0.4 - 1.4 d1/g (according to ASTM 4603) including homo- and copolymer. Alternatively, polyester blends comprised of polyester/polyolefin (e.g. PET/LLDPE, PET/LDPE or PET/PP), polyester/polyester (PET/PBT, PET/PEN, PET/PC), polyester/styrene copolymer (PET/SAN, PET/SEBS), polyester/high temperature thermoplastics. can be processed with help of the invented high-concentrates.

An expanding processing of virgin polyester resins or post-consumer polyester materials in form of granules, agglomerates, powders or flakes is also possible by applying anyone of said high-concentrate masterbatchs.

### Examples of the invention

This invention is illustrated by the following examples given for illustrative purpose and not to be regarded as limiting the invention or the manner in which it can be practiced.

### Example 1

7 weight parts of LDPE powder with particle size = 200-250µm in average and MFI=7.5g/10min. at 190°C/2.16kg, 2 weight parts of Irganox B 561 and 91 weight parts PMDA were mixed at 550 1/min. for 5 minutes in a high-speed mixer. The mixture was fed into a pan grinding press of Kahl 14-175 and compact-granulated to granules, whereas the press and process parameters were:
Multihole die: Outer diameter=175mm and perforated area=106cm²
Gap between rollers and die plate: 0.5mm
Dimension of both rollers: Diameter/width=130/29mm
Rotating speed of each roller: 0.5-0.8m/s
Mixture temperature: 55-70°C
Throughput: 8-12 kg/h.
Cooler temperature: 25°C
Cooling time: 1-5min.

The granulates with a particle size less than 3mm had still a temperature of 55-75°C before conveyed to the vibrating cooling line and cooled down for packing. After the cooling, the granulated mixture was packed and sealed in a bag coated with aluminum.

### Example 2

The procedure of Example 1 was repeated with the difference that 20 weight parts of Irganox 1330 were added, 73 instead of 91 weight parts of PMDA and 5 weight parts of EVA with an average particle size of 190-230µm and MFI=4g/10min. at 190°C/2.16kg instead of 7 weight parts of LDPE were used for the preparation process.

### Example 3

The procedure of Example 2 was repeated with the difference that 50 weight parts of PET copolymer (I.V.=0.76 dl/g and at least 80wt% particles less than 200µm) were added, 23 instead of 73 weight parts of PMDA and 5 weight parts of EMA with an average particle size of 200-300µm and MFI=8g/10min. at 190°C/2.16kg instead of EVA were used for the preparation process.

### Example 4

The procedure of Example 2 was repeated with the difference that 10 weight parts of 1,3-PBO were added, 63 instead of 73 weight parts of PMDA and 5 weight parts of EAA with an average particle size of 400µm and MFI=7g/10min. at 190°C/2.16kg instead of EVA were applied for the preparation process.

### Example 5

A co-rotating twin-screw extruder having a screw diameter of φ75mm and L/D=32, followed by a static mixer and a strand die, was applied. The forming tooling was a strand die consisting of 74 orifices distributed on the exit area of 67.5x35.5mm. The foam extrudate underwent a calibration after leaving the strand die to be shaped to a rectangular board.

PET copolymer (I.V.=0.78dl/g) was dried at 165°C for 8h and the high-concentrate masterbatch of Example 1 at 80°C for 8h. The PET resin together with 0.28wt% of the high-concentrate masterbatch and effectively 0.3wt% of a nucleating agent each by weight of the total throughput was continuously extruded and foamed at a throughput of 40kg/h. The PET resin and the concentrates were separately fed into the twin screw extruder by individual dosing units, whereas a highly precise dosing unit was applied to feed the multifunctional masterbatch into the extruder. The mixture was extruded and a free expansion took place with help of cyclopentane acting as blowing agent. The process parameters are summarized in Tab. 2.

**Tab. 2: Process parameters**

| Feature | Parameter |
|---|---|
| Temperature of feeding zone (°C) | 120-170 |
| Temperature of melting zone (°C) | 280-285 |
| Temperature of metering zone (°C) | 275-285 |
| Temperature of static mixer (°C) | 265-280 |
| Temperature of die (°C) | 280-290 |
| Melt throughput (kg/h) | 40 |
| Gas injection (g/min) | 17.5 |

The extrusion process was stable and a produced PET foam with a fine and uniform cell structure was obtained at a foam density about 100kg/m³.

### Example 6

The foam extrusion of Example 6 was repeated with the difference that the concentrate of Example 2 in amount of 0.38% instead of Example 1 was used by weight of the total throughput. The extrusion process was stable and an extruded PET foam with a fine and uniform cell structure was obtained at a foam density about 100kg/m³.

### Example 7

The foam extrusion of Example 6 was repeated with the difference that the concentrate of Example 3 in amount of 1.1% instead of Example 1 was used by weight of the total throughput. The extrusion process was stable and an extruded PET foam with a fine and uniform cell structure was obtained at a foam density about 100kg/m³.

### Example 8

The foam extrusion of Example 6 was repeated with the difference that the concentrate of Example 4 in amount of 0.40% instead of Example 1 was used by weight of the total throughput. The extrusion process was stable and an extruded PET foam with a fine and uniform cell structure was obtained at a foam density about 100kg/m³.

### Literature

1. Li, J., et al., EP 2 163 577 (2008)
2. Rotter, G.E., et al., US 5,288,764 (1993)
3. Kemani, K.C., et al., WO9509884 (1994)
4. Al Ghatta, H., et al., EP0801108 (1997)
5. Tabacchiera, A., EP 2 009 043 Al (2008)
6. N/A, DE 3806945 A1 (1989)

## Claims

1. A high-concentrate masterbatch comprising 2-20wt% of a thermoplastic wax having a vicat softening temperature not higher than 100°C (A50 (50°C/h 10N), according to ISO 306) and a multifunctional compound selected from one or a mixture of tetracarboxylic dianhydride, polyepoxides, oxazolines, oxazines, acyllactams and sterically hindered phenolic antioxidant, wherein the masterbatch is obtainable by a process which is **characterized by** a) a low temperature process leading to a masterbatch temperature lower than melting points of said multifunctional compound before cooling and b) cooling without contact of the mixture with water during the whole process.

2. The masterbatch according to claim 1 further comprising high-temperature thermoplastic resins, in an amount of 10 to 85 weight percent, preferably 30 to 60 weight percent of the masterbatch, and selected from one of thermoplastic resins or mixtures thereof having 1) a melting point not lower than 200°C for crystalline polymer or 2) a glass transition temperature not lower than 140°C for amorphous polymers.

3. The masterbatch according to anyone of claims 1 and 2 comprising a thermoplastic wax selected from one or a mixture of acrylic polymers, vinyl acetate polymers and polyolefins.

4. The masterbatch according to claim 3, wherein the acrylic polymers are an ethylene-acrylate copolymer selected from ethylene butyl acrylate (EBA), ethylene ethyl acrylate (EEA), ethylene methyl acrylate (EMA), ethylene/acrylic ester/maleic anhydride terpolymer (EEAMA) or a mixture thereof.

5. The masterbatch according to claim 4, wherein the ethylene-acrylate copolymer contains 3 to 50 percent of acrylate content by weight of the ethylene-acrylate copolymer and has a melt flow index from 0.1 to 200g/10 min. at 190°C/2.16kg.

6. The masterbatch according to claim 3, wherein the vinyl acetate polymers are an ethylene vinyl acetate copolymer having 3 to 50 percent of vinyl acetate content by weight of the ethylene vinyl acetate copolymer and a melt flow index from 0.1 to 200g/10 min. at 190°C/2.16kg

7. The masterbatch according to claim 3, wherein the polyolefins are a polyethylene having a melt flow index from 0.1 to 200g/10 min. at 190°C/2.16kg.

8. The masterbatch according to anyone of claims 1 and 2 comprising the multifunctional compound selected from a tetracarboxylic dianhydride with 2 or more acid anhydride groups per molecule.

9. The masterbatch according to claim 8, wherein the tetracarboxylic dianhydride is a pyromellitic dianhydride (PMDA), in an amount of 5 to 98 percent, preferably 15 to 95 percent by weight of the masterbatch.

10. The masterbatch according to anyone of claims 8 and 9 further comprising 2 to 40 weight percent, preferably 5 to 35 weight percent of a sterically hindered phenolic antioxidant.

11. The masterbatch according to claim 10 further comprising 2 to 40 weight percent, preferably 5 to 35 weight percent of an oxazoline.

12. The masterbatch according to claim 10, wherein the sterically hindered phenolic antioxidant is calcium bis(monoethyl(3,5-di-tert-butyl-4-hydroxylbenzyl)phosphonate) or 4-((3,5-bis((4-hydroxy-3,5-ditert-butyl-phenyl)methyl)-2,4,6-trimethylphenyl)methyl)-2,6-ditert-butyl-phenol.

13. The masterbatch according to claim 10, wherein the oxazoline is a monooxazoline or bisoxazoline or trioxazoline or a mixture thereof, preferably bisoxazoline being selected from
a. 1,3-phenyl bisoxazoline (1,3-PBO) and
b. 1,4-phenyl bisoxazoline (1,4 PBO).

14. The masterbatch according to claim 2, wherein the high-temperature thermoplastic resins are polyesters or compatible to polyesters, preferably selected from PET, PBT or PEN having an intrinsic viscosity of 0.4 to 1.4 dl/g.

15. The masterbatch according to anyone of the preceding claims further comprising a thermal and/or process stabilizer selected from a secondary (preventive) antioxidant or a mixture of the secondary antioxidant and sterically hindered phenols.

16. A process for the preparation of the masterbatch according to anyone of the preceding claims, wherein the thermoplastic wax and the multifunctional compound all in form of powders are homogeneously mixed in a mixer and compact-pelleted to granules by using a pan grinding press, whereas the compacted mixture has a temperature of 40-110°C before cooling.

17. The process for the preparation of the masterbatch according to claim 16, wherein the mixture out of the pan grinding press is continuously cooled in a vibrating cooling line tempered at a temperature of or below 30°C, whereas the granulated mixture has no direct contact with water.

18. An expanding process for production of an expanded material comprised of aromatic polyesters by applying the masterbatch of anyone of claims 1 to 15 in an amount from 0.1 to 10%, preferably between 0.2 and 4% by weight of the mixture, wherein the polyester resins to be processed are selected from a group consisting of virgin, post-consumer, recycled resin or a mixture thereof in form of granules, agglomerates, powders or flakes.

19. An expanded material, preferably a foamed cellular material obtainable according to the process of claim 18.

20. Articles containing the expanded material of claim 19.

## Patentansprüche

1. Hochkonzentrierte Vormischung, umfassend 2 - 20 Gew.-% eines thermoplastischen Wachses mit einer Vicat-Erweichungstemperatur von höchstens 100° C (A50 (50° C/h 10N) nach ISO 306), eine multifunktionelle Verbindung, ausgewählt aus Tetracarbonsäuredianhydrid, Polyepoxiden, Oxazolinen, Oxazinen, Acyllactamen oder einem Gemisch daraus, und ein sterisch gehindertes phenolisches Antioxidans, wobei die Vormischung herstellbar ist durch ein Verfahren, **gekennzeichnet durch**
a) ein Niedertemperaturverfahren, das zu einer Vormischungstemperatur unterhalb der Schmelzpunkte der multifunktionellen Verbindung vor der Abkühlung führt, und
b) Abkühlung ohne Kontakt des Gemisches mit Wasser während des gesamten Verfahrens.

2. Vormischung nach Anspruch 1, die außerdem noch hochtemperatur-thermoplastische Harze in einer Menge von 10 - 85 Gew.-%, vorzugsweise von 30 - 60 Gew.-%, der Vormischung, ausgewählt aus einem thermoplastischen Harz oder Gemischen davon mit
1) einem Schmelzpunkt von mindestens 200° C für ein kristallines Polymer oder
2) einer Glasumwandlungstemperatur von mindestens 140° C für amorphe Polymere, umfasst.

3. Vormischung nach einem der Ansprüche 1 und 2, umfassend ein thermoplastisches Wachs, ausgewählt unter Acrylpolymeren, Vinylacetatpolymeren und Polyolefinen.

4. Vormischung nach Anspruch 3, bei dem die Acrylpolymere ein Ethylenacrylat-Copolymer, ausgewählt unter Ethylenbutylacrylat (EBA), Ethylenethylacrylat (EEA), Ethylenmethylacrylat (EMA), Ethylen/Acrylsäureester/Maleinsäureanhydrid-Terpolymer (EEAMA) oder einem Gemisch davon, darstellen.

5. Vormischung nach Anspruch 4, bei dem das Ethylen-Acrylat-Copolymer 3 - 50 % Acrylat, bezogen auf das Gewicht des Ethylen-Acrylat-Copolymers, enthält und einen Schmelzindex von 0,1 bis 200 g/10 min. bei 190° C/2,16 kg aufweist.

6. Vormischung nach Anspruch 3, bei dem die Vinylacetatpoymere ein Ethylen-Vinylacetat-Copolymer mit einem Gehalt von 3 - 50 % Vinylacetat, bezogen auf das Gewicht des Ethylen-Acrylat-Copolymers, und einem Schmelzindex von 0,1 bis 200 g/10 min. bei 190° C/2,16 kg darstellen.

7. Vormischung nach Anspruch 3, wobei die Polyolefine ein Polyethylen mit einem Schmelzindex von 0,1 bis 200 g/10 min. bei 190° C/2,16 kg sind.

8. Vormischung nach einem der Ansprüche 1 und 2, enthaltend eine multifunktionelle Verbindung, ausgewählt unter einem Tetracarbonsäuredieanhydrid mit 2 oder mehr Säureanhydridgruppen pro Molekül.

9. Vormischung nach Anspruch 8, wobei das Tetracarbonsäuredianhydrid ein Pyromellitsäuredianhydrid (PMDA) in einer Menge von 5 bi 98 %, vorzugsweise von 15 bis 95 %, bezogen auf das Gewicht der Vormischung, ist.

10. Vormischung nach einem der Ansprüche 8 und 9, die außerdem noch 2 bis 40 Gew.-%, vorzugsweise 5 bis 35 Gew.-%, eines sterisch gehinderten phenolischen Antioxidans umfasst.

11. Vormischung nach Anspruch 10, die außerdem noch 2 bis 40 Gew.-%, vorzugsweise 5 bis 35 Gew.-%, eines Oxazolins umfasst.

12. Vormischung nach Anspruch 10, wobei das sterisch gehinderte phenolische Antioxidans Calcium-bis(monoethyl(3,5-di-tert-butyl-4-hydroxylbenzyl)phosphonat) oder 4-(3,5-Bis((4-hydroxy-3,5-ditert-butyl-phenyl)methyl)2,4,6-trimethyl-phenyl)methyl-2,6-ditert-butylphenol ist.

13. Vormischung nach Anspruch 10, wobei das Oxazolin ein Monooxazolin, Bisoxazolin oder Trioxazolin oder ein Gemisch davon, vorzugsweise Bisoxazolin, ausgewählt unter
a) 1,3-Phenyl-Bisoxazolin (1,3-PBO) und
b) 1,4-Phenyl-Bisoxazolin (1,4 PBO), ist.

14. Vormischung nach Anspruch 2, wobei die hochtemperatur-thermoplastischen Harze Polyester sind oder mit Polyestern verträglich sind, vorzugsweise ausgewählt unter PET, PBT oder PEN mit einer inneren Viskosität von 0,4 bis 1,4 dl/g.

15. Vormischung nach einem der vorhergehenden Ansprüche, die außerdem noch einen Wärmestabilisator und/oder einen Verarbeitungsstabilisator, ausgewählt unter einem sekundären (präventiven) Antioxidans oder einem Gemisch des sekundären Antioxidans mit sterisch gehinderten Phenolen, enthält.

16. Verfahren zur Herstellung der Vormischung nach einem der vorhergehenden Ansprüche, wobei das thermoplastische Wachs und die multifunktionelle Verbindung in Form von Pulver homogen in einem Mixer gemischt und unter Verwendung einer Kollermühlenpresse zu Granulat verdichtet-pelletiert werden, wobei die verdichtete Mischung vor der Abkühlung eine Temperatur von 40 bis 100° C aufweist.

17. Verfahren zur Herstellung der Vormischung nach Anspruch 16, wobei die Mischung außerhalb der Kollermühlenpresse in einer Schwingkühlungsstraße, getempert bei einer Temperatur von 30° C oder darunter, kontinuierlich abgekühlt wird, wobei die granulierte Mischung keinen direkten Kontakt mit Wasser hat.

18. Schäumungsverfahren zur Herstellung eines aromatische Polyester umfassenden geschäumten Materials durch Verwendung der Vormischung nach einem der Ansprüche 1 bis 15 in einer Menge von 0,1 bis 10 %, vorzugsweise von 0,2 bis 4 %, bezogen auf das Gewicht der Mischung, wobei die zu verarbeitenden Polyesterharze ausgewählt werden aus einer Gruppe, bestehend aus Neuharz, Abfallharz, recyceltem Harz oder einem Gemisch davon in Form von Granulat, Agglomeraten, Pulvern oder Flocken.

19. Geschäumtes Material, vorzugsweise ein Schaumstoffmaterial, erhältlich nach dem Verfahren gemäß Anspruch 18.

20. Erzeugnisse, welche das geschäumte Material nach Anspruch 19 enthalten.

## Revendications

1. Mélange maître très concentré comprenant, à concurrence de 2 à 20 % en poids, une cire thermoplastique possédant une température de ramollissement de Vicat qui n'est pas supérieure à 100 °C (A50 (50 °C/h 10N) selon la norme ISO 306) et un composé polyfonctionnel choisi parmi un élément ou un mélange d'éléments du groupe comprenant un dianhydride tétracarboxylique, des polyépoxydes, des oxazolines, des oxazines, des acyllactames et des antioxydants phénoliques à empêchement stérique, le mélange maître étant obtenu via un procédé qui est **caractérisé par** a) un procédé à basse température donnant lieu à une température du mélange maître qui est inférieur au point de fusion dudit composé polyfonctionnel avant le refroidissement et b) un refroidissement sans contact du mélange avec l'eau tout au long du processus.

2. Mélange maître selon la revendication 1, comprenant en outre des résines thermoplastiques qui résistent à des températures élevées, en une quantité de 10 à 85 % en poids, de préférence de 30 à 60 % en poids du mélange maître, et qui sont choisies parmi une résine thermoplastique ou des mélanges de ces dernières possédant 1) un point de fusion qui n'est pas inférieur à 200 °C pour un polymère cristallin ou 2) une température de transition vitreuse qui n'est pas inférieure à 140 °C pour des polymères amorphes.

3. Mélange maître selon l'une quelconque des revendications 1 et 2, comprenant une cire thermoplastique choisie parmi un élément ou un mélange d'éléments du groupe comprenant des polymères acryliques, des polymères d'acétate de vinyle et des polyoléfines.

4. Mélange maître selon la revendication 3, dans lequel les polymères acryliques représentent un copolymère d'éthylène-acrylate choisi parmi l'éthylène-acrylate de butyle (EBA), l'éthylène-acrylate d'éthyle (EEA), l'éthylène-acrylate de méthyle (EMA), un terpolymère d'éthylène/ester acrylique/anhydride maléique (EEAMA) ou un de leurs mélanges.

5. Mélange maître selon la revendication 4, dans lequel le copolymère d'éthylène-acrylate possède une teneur en acrylate de 3 à 50 % en poids du copolymère d'éthylène-acrylate et possède un indice de fluidité à chaud de 0,1 à 200 g/10 min. à 190 °C/2,16 kg.

6. Mélange maître selon la revendication 3, dans lequel les polymères d'acétate de vinyle représentent un copolymère d'éthylène-acétate de vinyle possédant une teneur en acétate de vinyle de 3 à 50 % en poids du copolymère d'éthylène-acétate de vinyle et un indice de fluidité à chaud de 0,1 à 200 g/10 min. à 190 °C/2,16 kg.

7. Mélange maître selon la revendication 3, dans lequel les polyoléfines représentent un polyéthylène possédant un indice de fluidité à chaud de 0,1 à 200 g/10 min. à 190 °C/2,16 kg.

8. Mélange maître selon l'une quelconque des revendications 1 et 2, comprenant un composé polyfonctionnel choisi parmi un dianhydride tétracarboxylique contenant 2 groupes d'anhydride d'acide ou plus par molécule.

9. Mélange maître selon la revendication 8, dans lequel le dianhydride tétracarboxylique est un dianhydride pyromellitique (PMDA) en une quantité de 5 à 98 %, de préférence de 15 à 95 % en poids du mélange maître.

10. Mélange maître selon l'une quelconque des revendications 8 et 9, comprenant en outre, à concurrence de 2 à 40 % en poids, de préférence de 5 à 35 % en poids, un antioxydant phénolique à empêchement stérique.

11. Mélange maître selon la revendication 10, comprenant en outre, à concurrence de 2 à 40 % en poids, de préférence de 5 à 35 % en poids, une oxazoline.

12. Mélange maître selon la revendication 10, dans lequel l'antioxydant phénolique à empêchement stérique est le bis(monoéthyl(3,5-di-tert-butyl-4-hydroxybenzyl)phosphonate de calcium ou le 4-((3,5-bis((4-hydroxy-3,5-di-tert-butylphényl)méthyl)-2,4,6-triméthyl-phényl)méthyl)-2,6-di-tert-butyl-phénol.

13. Mélange maître selon la revendication 10, dans lequel l'oxazoline est une monooxazoline ou une bisoxazoline ou une trioxazoline ou un de leurs mélanges, la bisoxazoline étant de préférence choisie parmi :
a. la 1,3-phényl bisoxazoline (1,3-PBO) et
b. la 1,4-phényl bisoxazoline (1,4-PBO).

14. Mélange maître selon la revendication 2, dans lequel les résines thermoplastiques qui résistent à des températures élevées sont des polyesters ou sont compatibles avec des polyesters, choisis de préférence parmi le PET, le PBT ou le PEN possédant une viscosité intrinsèque de 0,4 à 1,4 dl/g.

15. Mélange maître selon l'une quelconque des revendications précédentes, comprenant en outre un stabilisateur thermique et/ou un stabilisateur du processus choisi parmi un antioxydant secondaire (préventif) ou un mélange de l'antioxydant secondaire et de phénols à empêchement stérique.

16. Procédé pour la préparation du mélange maître selon l'une quelconque des revendications précédentes, dans lequel la cire thermoplastique et le composé polyfonctionnel, tous sous forme pulvérulente, sont soumis à un mélange homogène dans un mélangeur et sont transformés en granulés compacts en utilisant une presse par broyage, tandis que le mélange rendu compact possède une température de 40 à 110 °C avant le refroidissement.

17. Procédé pour la préparation du mélange maître selon la revendication 16, dans lequel le mélange issu de la presse par broyage est refroidi en continu dans une ligne de refroidissement vibrante maintenue à une température égale ou inférieure à 30 °C, tandis que l'on exclut tout contact direct du mélange transformé en granulés avec l'eau.

18. Procédé d'expansion pour la production d'un matériau expansé comprenant des polyesters aromatiques par application du mélange maître selon l'une quelconque des revendications 1 à 15, en une quantité de 0,1 à 10 %, de préférence entre 0,2 et 4 % en poids du mélange, les résines de polyesters à traiter étant choisies parmi le groupe constitué par de la résine vierge, de la résine de post-consommation, de la résine recyclée ou un de leurs mélanges sous la forme de granulés, d'agglomérats, de poudres ou de paillettes.

19. Matière expansée, de préférence une matière cellulaire transformée en mousse que l'on peut obtenir conformément au procédé selon la revendication 18.

20. Articles contenant la matière expansée selon la revendication 19.
